# EUROPEAN PATENT APPLICATION

(11) **EP 1 906 593 A1**
(43) Date of publication of application: **02.04.2008**
(21) Application number: 06015821.9
(22) Date of filing: 28.07.2006
(51) Int. Cl.: H04L 12/28

(54) **Mobility optimisation based on IP prefix information in WLAN SSID**

(71) Applicant: Nokia Siemens Networks GmbH & Co. KG, 81541 München (DE)
(72) Inventor: Fischer, Karl, 1140 Wien (AT); Punz, Gottfried, Dr., 1080 Wien (AT)

(57) **Abstract**

The patent application concerns networks, mobile nodes and a method for handover of a first connection (Fig. 1, "first connection C1") between a mobile node (Fig. 1, "MN") and a first access point (Fig 1, "AP 1") of a first access network (Fig. 1, "access network AN1") to a second connection (Fig. 1, "second connection C2") between the mobile node (Fig. 1, "MN") and a second access point (Fig 1, "AP 4") of a second access network (Fig. 1, "access network AN 2"),
wherein a broadcast message (Fig. 1, "Broadcast", "origSSID<escl><prefix>" / "origSSID<esc2><DNS-name>") is sent by the second access point (Fig 1, "AP 4") wherein the broadcast message (Fig. 1, "Broadcast", "origSSID<esc1><prefix>" / "origSSID<esc2><DNS-name>") comprises layer-3-information (Fig. 1, "Broadcast", "origSSID<esc1><prefix>" / "origSSID<esc2><DNS-name>") concerning the second connection (Fig. 1, "second connection C2").

## Description

The invention concerns networks, mobile nodes and a method for handover.

Seamless mobility between 3GPP and non-3GPP access systems is a target within 3GPP's System Architecture Evolution (SAE). There it is generally agreed that handover (HO) solutions shall work on the IP layer (L3), and in particular that the MIP set of protocols shall be used. In other forums high efforts have already been spent on the development of different variants and optimizations of MIP. The advantage of placing the HO functionality on L3 is thought to be its generality and independence from the details of the access technology (L2).

On the other hand it is known that the optimal handover performance like e.g. in GSM/GPRS/ UMTS networks is achieved only at layer 2. In comparison, it must be stated for MIP that
- it had never been designed for HO's,
- some opportunities for optimization have not been taken,
- the (re)configuration of L3 properties during HOs is too time-consuming.

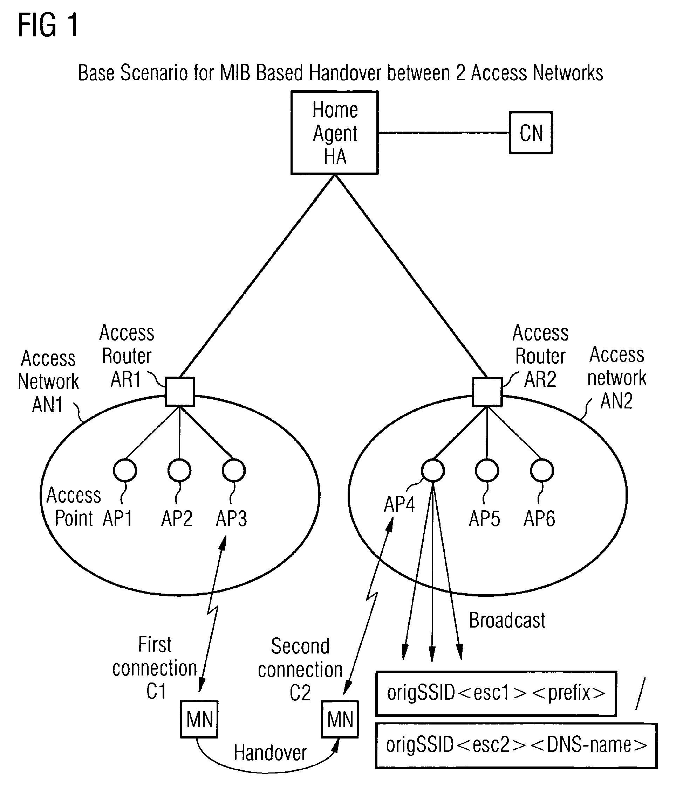

The base scenario, generalized for two arbitrary access networks, is shown in Fig. 1 (base scenario for MIP based handover between 2 access networks).

The Mobile Node (MN) has radio connection with Access Points (AP), either to one (single radio) or to more than one at a time (parallel radio). As long as it moves (arrow in Fig. 1) within the coverage of one access network it is connected on L2 also to the corresponding Access Router (AR), which is the first IP router in uplink direction. The APs broadcast SSIDs (Service Set IDs). This information (maximal 32 octets) is primarily an identification of the cell, but may also be used to logically link several of them together. We assume here a provisioning where one and the same SSID is used for all APs linked to one subnet of an AR.

For a normal IP based handover from access network 1 to access network 2, e.g. when moving from radio coverage by AP 3 to that of AP 4, the main steps are:
- step 1: initially the MN is in radio contact with AP3 and IP enabled (depending on the details a local IP address and/or global IP address are configured)
- step 2: detect that access network 2 is available, e.g. by passive scanning
- step 3: associate with access network 2 via AP4 (this may include authentication and authorization, which is not discussed here)
- step 4: prepare L3 properties for the new access (i.e. IP address[es]); this could also be done - in an optimistic approach - before step 3
- step 5: optional further authentication and authorization (on higher layers) may be done, but are not discussed further here
- step 6: depending on the details a registration with a network entity (e.g. HA) has to be done
- step 7: now the MN is reachable via the new IP address and data may be transferred
- step 8: dissociate from access network 1 (depending on whether parallel radio capability of the MN this could also happen before step 3)

It is an object of the invention to provide an efficient handover of a connection between a mobile node and a first access point of a first access network to a connection between the mobile node and a second access point of a second access network. The object is respectively achieved by the invention defined in the patent claims.

An implementation of the invention can especially provide the following advantages:
1. speed up of L3 configuration before/during handovers;
2. resulting from item 1, smoothing of handovers;
3. simplicity in terminals and network (e.g. in comparison to alternatives like FMIP)
4. minimal signaling (none in variant 1, 1 DNS query in variant 2)

The improvement described in this paper focuses on 3 aspects:
- how to receive L3 information on L2 for the new access system, while keeping connectivity with the old one,
- how to shorten the disruption time interval for the HO and
- how to minimize the complexity of and effort for configuration for such a solution within the networks.

Further details and advantages of the invention are set forth in the claims and in the following non-limiting description of an example, wherein in the enclosed drawing:
Fig. 1 shows a base scenario for MIP based handover between 2 access networks.
Fig. 2 shows possible information relationships between L2 and L3 in two access networks.
Fig. 3 shows a message flow explanation for a message flow example.

The main idea is to provide L3 information via L2 to the MN, so that it can timely prepare itself for the IP layer connectivity change with the HO.

This description is limited to pure IPv6 deployments (MN, access networks and HA). It optimizes the HO procedure towards WLAN.

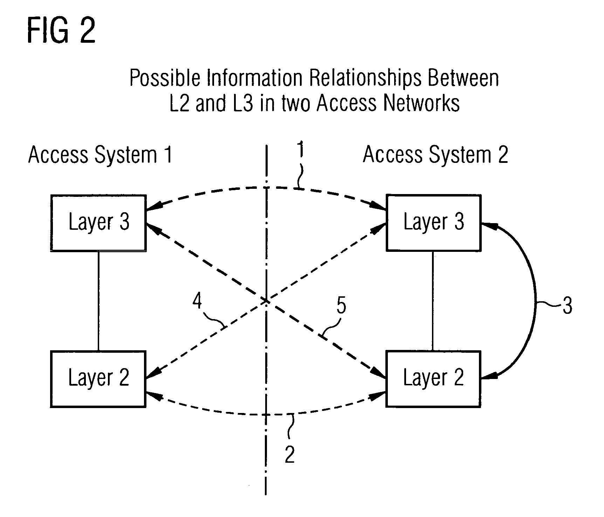

First the principal possibilities to do so are described. The arrows in fig. 2 indicate possible information exchange as listed:
1. L3 of access system 1 has, or can be utilized to provide, information about L3 properties of access system 2 (present with FMIP, and with MNs parallel, active radio capability for both access systems).
2. L2 of access system 1 has information on L2 properties of access system 2 (present in 3GPP access systems).
3. L2 of access system 2 has information on its own L3 properties **(this is the aim of the concept presented here).**
4. L2 of access system 1 has information on L3 properties of access system 2 (currently not existent; it would e.g. be the case if a 3GPP access system knew IP prefixes of neighbouring WLANs).
5. L3 of access system 1 has information on L2 properties of access system 2 (present with FMIP)

Figure 2 shows possible information relationships between L2 and L3 in two access networks.

It is clear then that information provisioning across access systems (labels 1, 2 and 4) is much more difficult to achieve than between L3 and L2 of the same access system (label 3).

### Detailed Solution :

The solution suggests constructing SSIDS (which can be broadcast from access points (AP 1-6 in Fig.1) to Mobile Nodes MN which can extract also L3 information from them) which include (piggybacked) layer 3 information. 2 variants are explained:

### a) Variant 1: Inclusion of IPv6 Address Prefix in SSID

An IPv6 address prefix of length of 64 bits = 8 octetts is appended to the original SSID:

| |
|---|
| origSSID<esc1><prefix> |

Advantage: the IP prefix can be readily used; together with a unique identifier for the mobile node there is no need to perform an additional request to the network.
Disadvantage: higher effort with later changes (e.g. changes with IP address ranges of ARs require new provisioning of the SSID to the APs).

### b) Variant 2: Usage of DNS info in SSID

The SSID has the format:

| |
|---|
| origSSID<esc2><DNS-name> |

Advantage: more flexibility for changes in the access network (e.g. changes with IP address ranges of ARs require no new provisioning of the SSID to the APs).
Disadvantage: another request to the network for resolution of DNS-name is necessary.

### c) Common Aspects

<esc1> and <esc2> are escape characters, which can be defined arbitrarily. The MNs supporting this intended enhancement shall extract the information after <esc1> or <esc2> and proceed accordingly. I.e. if a DNS name was appended, a DNS resolution is done in order to receive a valid IPv6 address prefix. If an explicit IPv6 address prefix was appended, it can be readily used. In both cases the information in front of <esc1> or <esc2> is used exactly as SSIDs would be used without this enhancement (e.g. for display, selection, etc.).

### d) Limitations

This optimization assumes the possibility of parallel scanning on L2 of a second access system during an ongoing connection via the first one.

The length restriction for SSIDs (32 octetts) limits the length of the original SSID (depending on which variant is chosen).

Escape characters <esc1> and <esc2> need to be defined and must not be used in SSIDs otherwise.

This enhancements puts some requirements on the provisioning of WLAN APs. The administration of several or many WLAN APs with the necessary SSID information may be done conveniently via CAPWAP [8].

### e) Terminal impacts

Terminals require a small change in the handling of SSIDs. Terminals need to support DNS (for above variant 2) - this may be considered a standard IP feature. The DNS query has to be handled in parallel with ongoing traffic in the old access system.

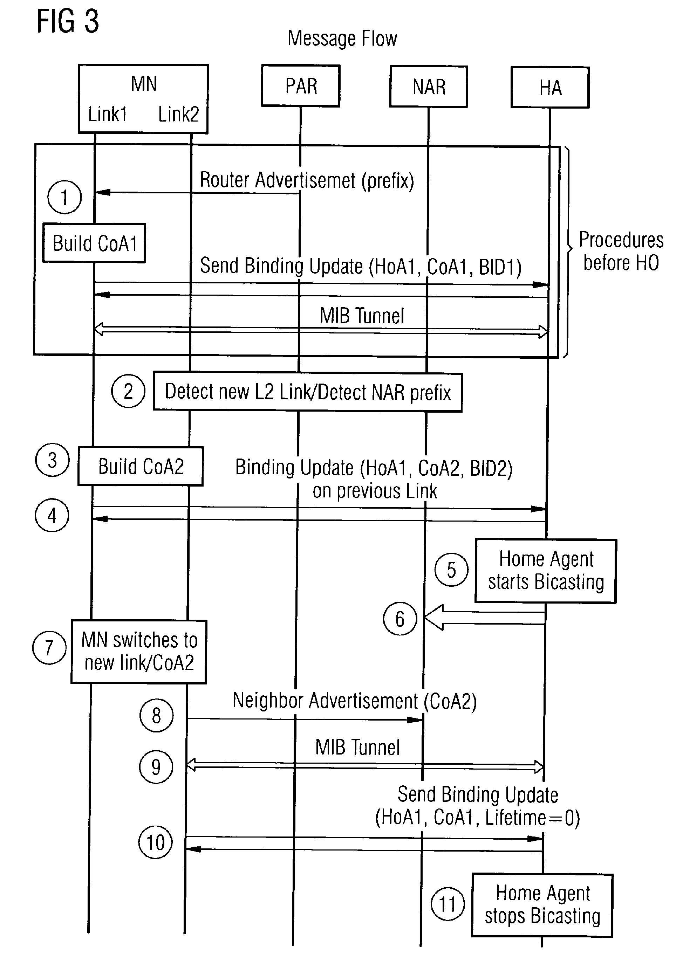

An Illustration of a message flow in Fig. 3 follows (with multihoming, multiple Care-of-Address & bicasting). For showing the benefit of this approach Fig. 3 shows a possible message flow based on it. Multihoming (with respect to local IP addresses) is assumed, and the multiple CoA and bicasting during the HO requires support of [7].

Message Flow Explanation (Fig. 3):
1. Mobile IPv6 procedure, with Binding Unique Identifier sub-option according to [7]
2. Detection of the new link, with L3 information. **This is the feature described in sections above.**
3. The new/envisaged Care-of-Address CoA2 is built.
4. Mobile Node sends a Binding Update message which contains the Home Address HA, the CoA2 and Binding Unique Identification number 2 (BID2).
5. The home agent starts bicasting of downlink data.
6. Due to the fact that the MN has not yet been L3 configured, packets are dropped at the NAR.
7. The MN stops L2 connectivity with the PAR and starts L2 connectivity with AR2 (additionally there might be access NW specific security procedures, which are not shown).
8. The MN sends a Neighbour Advertisement, which leads to establishment of L3 connectivity.
9. From now on IP packets are received within access system 2, at CoA2.
10. The MIP registration with the old CoA1 is resolved.
11. Bicasting of downlink packets is stopped at the HA.

In this example, even without parallel active radio, only a minimal interruption time between steps 7 and 9 occurs.

### Abbreviations

- AP: Access Point
- 3GPP: Third Generation Partnership Project
- HA: Home Agent
- MIP: Mobile IP
- MN: Mobile Node
- SAE: System Architecture Evolution
- SSID: Service Set ID
- UE: User Equipment
- NAR: Next Access Router
- PAR: Previous Access Router

### References

[1] 3GPP TS 33.234 V6.5.1 (2005-06), "3G Security; Wireless Local Area Network (WLAN) Interworking Security"
[2] 3GPP TS 23.234 V6.5.0 (2005-06), "3GPP System to Wireless Local Area Network (WLAN) Interworking; System description"
[3] 3GPP TS 29.234 V6.3.0 (2005-06), "3GPP system to Wireless Local Area Network (WLAN) Interworking; Stage 3"
[4] C. Kaufman (ed.), "Internet Key Exchange (IKEv2) Protocol", draft-ietf-ipsec-ikev2-17.txt, September 2004
[5] S. Kent, R. Atkinson, "IP Encapsulating Security Payload (ESP)", RFC 2406, November 1998
[6] S. Kent, R. Atkinson, "Security Architecture for the Internet Protocol", RFC 2401, November 1998
[7] R. Wakikawa, T. Ernst and K. Nagami, "Multiple Care-of Addresses Registration", draft-wakikawa-mobileip-multiplecoa-05, February 2006
[8] P. Calhoun et.al. (eds.), "CAPWAP Protocol Specification", draft-ietf-capwap-protocol-specification-01

## Claims

1. Method for handover of a first connection (Fig. 1, "first connection C1") between a mobile node (Fig. 1, "MN") and a first access point (Fig 1, "AP 1") of a first access network (Fig. 1, "access network AN1")
to a second connection (Fig. 1, "second connection C2") between the mobile node (Fig. 1, "MN") and a second access point (Fig 1, "AP 4") of a second access network (Fig. 1, "access network AN 2"),
wherein a broadcast message (Fig. 1, "Broadcast", "origSSID<esc1><prefix>" / "origSSID<esc2><DNS-name>") sent by the second access point (Fig 1, "AP 4") comprises layer-3-information (Fig. 1, "origSSID<esc1><prefix>" / "origSSID<esc2><DNS-name>") concerning the second connection (Fig. 1, "second connection C2").

2. Method according to claim 1, **characterized in that** a mobile node (Fig. 1, "MN") extracts information from the broadcast message and uses it for a connection (Fig. 1, "second connection C2") after a handover.

3. Method according to any of the preceding claims,
**characterized in that** the layer-3-information is sent in a broadcast message by an access point to mobile nodes (Fig. 1, "MN") for informing the mobile nodes (Fig. 1, "MN") that a connection (Fig. 1, "second connection C2") via the access point (Fig 1, "AP 4") is possible.

4. Method according to any of the preceding claims,
**characterized in that**
the layer-3-information is sent in a SSID message broadcast (Fig. 1, "Broadcast", "origSSID<esc1><prefix>" / "origSSID<esc2><DNS-name>") by an access point (Fig 1, "AP 4") to mobile nodes (Fig. 1, "MN") for informing the mobile nodes (Fig. 1, "MN") that a connection (Fig. 1, "second connection C2") via the access point (Fig 1, "AP 4") is possible.

5. Method according to any of the preceding claims,
**characterized in that**
the broadcast message (Fig. 1, "Broadcast", "origSSID<esc1><prefix>" / "origSSID<esc2><DNS-name>") comprises IP address information (Fig. 1, "Broadcast origSSID<esc1><prefix>") regarding an IP address for the second connection (Fig. 1, "second connection C2"), especially an IPv6 Address of the mobile mode (Fig. 1, "MN") or of the access point (Fig. 1, "AP 4").

6. Method according to any of the preceding claims,
**characterized in that**
the broadcast message (Fig. 1, "Broadcast", "origSSID<esc1><prefix>" / "origSSID<esc2><DNS-name>") comprises an IP address prefix (Fig. 1, "origSSID<esc1><prefix>").

7. Method according to any of the preceding claims,
**characterized in that**
the broadcast message (Fig. 1, "Broadcast", "origSSID<esc1><prefix>" / "origSSID<esc2><DNS-name>") comprises an identifier of the mobile node (Fig. 1, "MN"), especially a unique identifier (Fig. 1, "origSSID<esc2><DNS-name>").

8. Method according to any of the preceding claims,
**characterized in that**
the broadcast message (Fig. 1, "Broadcast", "origSSID<esc1><prefix>" / "origSSID<esc2><DNS-name>") comprises DNS information or domain name service information.

9. Method according to any of the preceding claims,
**characterized in that**
the broadcast message (Fig. 1, "Broadcast", "origSSID<esc1><prefix>" / "origSSID<esc2><DNS-name>") comprises a DNS-name.

10. Method according to any of the preceding claims,
**characterized in that**
the broadcast message (Fig. 1, "Broadcast", "origSSID<esc1><prefix>" / "origSSID<esc2><DNS-name>") comprises further characters (<esc1>, <esc2>) indicating that a DNS-name or IP address prefix follows the further characters.

11. Method according to any of the preceding claims,
**characterized in that**
a mobile node (Fig. 1, "MN") receiving the broadcast message (Fig. 1, "Broadcast", "origSSID<esc1><prefix>" / "origSSID<esc2><DNS-name>") uses information in the broadcast message (Fig. 1, "Broadcast", "origSSID<esc1><prefix>" / "origSSID<esc2><DNS-name>") for communication over the second connection (Fig. 1, "second connection C2").

12. Method according to any of the preceding claims,
**characterized in that**
a mobile node (Fig. 1, "MN") receiving the broadcast message (Fig. 1, "Broadcast", "origSSID<esc1><prefix>" / "origSSID<esc2><DNS-name>") uses information in the broadcast message (Fig. 1, "Broadcast", "origSSID<esc1><prefix>" / "origSSID<esc2><DNS-name>") for communication over the second connection (Fig. 1, "second connection C2").

13. Method according to any of the preceding claims,
**characterized in that**
if the broadcast message (Fig. 1, "Broadcast", "origSSID<esc1><prefix>" / "origSSID<esc2><DNS-name>") comprises a DNS name, a DNS resolution is done in order to receive a valid IPv6 address prefix.

14. Method according to any of the preceding claims,
**characterized in that**
if the broadcast message (Fig. 1, "Broadcast", "origSSID<esc1><prefix>" / "origSSID<esc2><DNS-name>") comprises an IPv6 address prefix, the IPv6 address prefix is used for the second connection (Fig. 1, "second connection C2").

15. Method according to any of the preceding claims,
**characterized in that**
the DNS name represents the DNS name of a network component (Fig 1, "AP 4") of the second connection (Fig. 1, "second connection C2"), especially of an access point (Fig 1, "AP 4") of the second connection (Fig. 1, "second connection C2").

16. Method according to any of the preceding claims,
**characterized in that** the IPv6 address prefix is an IPv6 address prefix of a network component of the second connection (Fig. 1, "second connection C2"), especially of an access point of the second connection (Fig. 1, "second connection C2").

17. Mobile network implementing a method according to any of the preceding claims.

18. Mobile network access point (Fig. 1, "AP 4"), for handover of a first connection between a mobile node (Fig. 1, "MN") and a first access point (Fig 1, "AP 1") of a first access network (Fig. 1, "access network AN 1") to a second connection (Fig. 1, "second connection C2") between the mobile node (MN) and a second access point (Fig 1, "AP 4") of a second access network (access network 2),
wherein the access point (Fig. 1, "AP 4") comprises a sender or access to a sender for sending a broadcast message (Fig. 1, "Broadcast", "origSSID<esc1><prefix>" / "origSSID<esc2><DNS-name>") wherein the broadcast message (Fig. 1, "Broadcast", "origSSID<esc1><prefix>" / "origSSID<esc2><DNS-name>") comprises layer-3-information (Fig. 1, "origSSID<esc1><prefix>", "origSSID<esc2><DNS-name>") concerning the second connection (Fig. 1, "second connection C2").

19. Mobile node (Fig. 1, "MN") implementing a method according to any of the preceding method claims.

20. Mobile node (Fig. 1, "MN")
- for handover of a first connection between a mobile node (Fig. 1, "MN") and a first access point (Fig 1, "AP 1") of a first access network (Fig. 1, "access network 1") to a second connection (Fig. 1, "second connection C2") between the mobile node (Fig. 1, "MN") and a second access point (Fig 1, "AP 4") of a second access network (Fig. 1, "access network AN 2"),
- with a receiver for receiving a broadcast message (Fig. 1,"broadcast") comprising layer-3-information (Fig. 1, "origSSID<esc1><prefix>, origSSID<esc2><DNS-name>") concerning the second connection (Fig. 1, "second connection C2"),
- with an extracting device for extracting layer-3-information (Fig. 1, "origSSID<esc1><prefix>, origSSID<esc2><DNS-name>") concerning the second connection (Fig. 1, "second connection C2"),
- with a receiver and/or a sender using extracted layer-3-information (Fig. 1, origSSID<esc1><prefix>, origSSID<esc2><DNS-name>") for sending or receiving information via the second connection (Fig. 1, "second connection C2") after a handover to the second connection (Fig. 1, "second connection C2").
